# EUROPEAN PATENT SPECIFICATION

(11) **EP 2 137 255 B1**
(45) Date of publication and mention of the grant of the patent: **04.07.2012**
(21) Application number: 08744293.5
(22) Date of filing: 25.03.2008
(51) Int. Cl.: C08L 3/02, C08L 23/02, C08L 23/26, C08L 23/08, C08L 23/10

(54) **STARCH-POLYOLEFIN COMPOSITES WITH IMPROVED PERFORMANCE**
STÄRKE-POLYOLEFIN-ZUSAMMENSETZUNGEN MIT VERBESSERTER LEISTUNG
COMPOSITES AMIDON-POLYOLÉFINE PRÉSENTANT DES PERFORMANCES AMÉLIORÉES

(30) Priority: 06.04.2007 US 922223 P; 21.03.2008 US 77765
(43) Date of publication of application: 30.12.2009
(73) Proprietor: CHEMTURA CORPORATION, Middlebury, CT 06749 (US)
(72) Inventor: SIGWORTH, William D., Naugatuck, CT 06770 (US); FRENKEL, Peter, Danbury, CT 06811 (US)
(74) Representative: Serravalle, Marco
(86) International application number: PCT/US2008/058099
(87) International publication number: WO 2008/124287

(56) References cited:
- GB-A- 2 272 700
- US-A- 5 510 401
- US-A- 5 627 223
- US-A1- 2005 171 249

## Description

### BACKGROUND OF THE INVENTION

### 1. Field of the Invention

The present invention relates to a method for improving the mechanical stiffness and strength of polyolefin-based composites containing granular starch. More particularly, the present invention relates to the use of maleic anhydride functionalized polyolefin coupling agents to improve the mechanical stiffness and strength of polyolefin based composites containing granular starch.

### 2. Description of Related Art

The plastics industry is constantly searching for ways to make superior products at lower cost. Since most plastics are based on petroleum feedstocks, the effort to use them more efficiently has intensified in recent years owing to the escalation of oil prices.

Adding cheap fillers is one approach to keeping formulation costs down while conserving petroleum based plastics. In many cases, it is desirable that the filler not only reduce cost, but also provide better mechanical properties, e.g., higher stiffness and/or higher strength. Raw, granular starch from vegetable sources such as corn, rice, wheat, and potatoes qualifies as a cheap filler. It typically sells for about $0.11/lb or less compared with polyolefins, which are priced at about $0.60-0.80/lb. The issue with adding hydrophilic granular starch to hydrophobic, petroleum based plastics, such as polyolefins, is that poor compatibility between the two materials leads to inferior mechanical properties.

Another potential advantage of starch blends with petroleum based plastics is degradability. Granular starch will degrade. If the starch is used a high enough levels, composites made from starch-plastic blends will lose their integrity (degrade) once the starch degrades. These composites generally will not meet strict definitions for biodegradability or composability as the biodegradation of the starch leaves microscopic amounts of high molecular weight plastic in the area where the article was placed; however, being degradable can be desirable for some less demanding applications.

The fact remains that the performance of starch-filled plastics must be improved before they are to be deemed acceptable for use in a wide variety of plastics applications.

U.S. Patent No. 5,461,094 discloses a biodegradable film prepared by chemical bonding of starch and polyethylene chains using polyethylene, a coupling agent, such as maleic anhydride, methacrylic anhydride, or maleimide, which bonds with starch and polyethylene, and an acid catalytic comonomer, such as acrylic acid and/or methacrylic acid.

U.S. Published Application No. 2005/0171249 discloses the addition of granular starch to a polymer in order to decrease the cost of the polymer derivative and to make the derivative more biodegradable. Glycerol is not added to the mixture, which reduces the water absorbency of the final product. The polymer and starch are blended together in the presence of an interfacial compatibilizer that binds the two components together.

### SUMMARY OF THE INVENTION

It has been discovered that maleic anhydride functionalized polyolefin coupling agents can significantly improve the mechanical stiffness and strength of polyolefin based composites containing granular starch. In addition, the maleic anhydride functionalized polyolefins of the present invention have been determined to be more efficient in the coupling of polyolefin resins to granular starch than were previously known maleic anhydride functionalized coupling agents.

More particularly, the present invention is directed to a composition comprising:
(A) from about 60 wt % to about 10 wt % of a polyolefin resin:
(B) from greater than 40 wt % up to about 90 wt % of a granular starch; and
(C) from about 0,1 wt % to about 10 wt % of a functionalized polyolefin coupling agent.

### DESCRIPTION OF THE PREFERRED EMBODIMENTS

The granular starch employed in the practice of the present invention can come from any one of many sources including corn, wheat, rice, potatoes or other suitable crop. Increases in flexural properties will depend on starch level. Generally, levels below 30 weight percent do not produce any substantial changes in properties versus the unfilled polymer. Therefore, starch levels greater than 30% are employed in the practice of this invention. Preferably, the amount of starch is comprised between 40 and 80 wt.%.

The thermoplastic resin is selected from polyethylene, copolymers of ethylene and other alpha olefins, such as propylene, butene, hexene, and octene, copolymers of polyethylene and vinyl acetate, polypropylene, copolymers of propylene with other alpha olefins including, but not limited to, ethylene, and combinations thereof. More preferably, the thermoplastic resin is selected from the group consisting of high-density polyethylene, low-density polyethylene, linear low-density polyethylene, polypropylene, and combinations thereof. Most preferably, the thermoplastic resin is high density homopolymer polyethylene and high density copolymers of ethylene with butene, hexene, and octene, linear low density polyethylene, polypropylene, and combinations thereof.

The olefin polymers may be produced by, for example, polymerization of olefins in the presence of Ziegler-Natta catalysts optionally on supports such as, for example, MgCl₂, chronium salts and complexes thereof, silica, silica-alumina and the like. The olefin polymers may also be produced utilizing chromium catalysis or single site catalysts, e.g., metallocene. catalysts such as, for example, cyclopentadiene complexes of metals such as Ti and Zr. As one skilled in the art would readily appreciate, the polyethylene polymers used herein, e.g., LLDPE, can contain various comonomers such as, for example, 1-butene, 1-hexene and 1-octene comonomers.

The functionalized polyolefins employed as the coupling agents of the present invention are modified polyethylene or polypropylene that contain groups that can interact with groups on species to be coupled. Such polymers are modified by a reactive group including at least one polar monomer selected from the group consisting of ethylenically unsaturated carboxylic acids or ethylenically unsaturated carboxylic acid anhydrides. Mixtures of the acids and anhydrides, as well as their derivatives, can also be used. Examples of the acids include maleic acid, furnaric acid, itaconic acid, crotonic acid, acrylic acid, methacrylic acid, maleic anhydride, itaconic anhydride, and substitued maleic anhydrides, Maleic anhydride is preferred. Derivatives that may also be used include salts, amides, imides, and esters. Examples of these include, glycidyl methacrylate, mono- and disodium maleate, and acrylamide. Preferably, such couplers comprise a polyolefin, such as a polyethylene or polypropylene, having a number average molecular weight (by GPC) that ranges from about 2,000 to about 400,000. Each polymer of the coupling agent can be modified from about 0,1 to about 800 residues per mole of the polymer. Preferred couplers comprise either a modified polypropylene or a modified polyethylene modified with maleic anhydride residues. The most preferred couplers are maleic anhydride modified polypropylenes, maleic anhydride modified linear low density polyethylenes, and maleic anhydride modified high density polyethylenes. The preferred materials have a number average molecular weight (by GPC) that ranges from about 20,000 to about 300,000 and contain about 0.1 to about 3% maleic anhydride.

| **Preferred Embodiments for Starch-Polyolefin Composites with Improved Mechanical Properties** | | | | | | |
|---|---|---|---|---|---|---|
| | **Resin Type** | **Resin MFI** | **Fiber Type** | **Starch Loading** , % | **Coupling Agent type** | **% Coupling Agent** |
| **Preferred** | PE including HD, LD, LLD, copolymers w/ other alpha olefins, PP, PP copolymers with alpha olefins | 0.1 - 100 | Granular Starch from sources listed above | 31-90 | Maleic anhydride grafted PE including HD, LD, LLD, copolymers w/ other alpha olefins, PP, PP copolymers with other alpha olefins | 0.1 - 10 |
| **More Preferred** | PE including HD, LD, LLD, copolymers w/ other alpha olefins, PP, PP copolymers with ethylene | 0.3 - 50 | Granular Starch from sources listed above | 40-80 | Maleic anhydride grafted PE including HD, LD, LLD, copolymers w/ other alpha olefins, PP, PP copolymers with alpha olefins | 0.5 - 3.0 |
| **Most Preferred** | HDPE, LLDPE, PP | 0.3 - 30 | Granular Starch from sources listed above | 50-70 | Maleic anhydride grafted HDPE, LLDPE, PP | 0.5 - 2.0 |

The resin component of the composites of the present invention is preferably present in the range of from about 60 weight percent to about 10 weight percent; more preferably, from about 60 weight percent to about 20 weight percent; most preferably, from about 50 weight percent to about 30 weight percent, based on the total weight of the resin, starch, and coupling agent.

Optionally, the starch-polyethylene composite can contain other additives, such as:
1. Lubricants that do not interfere with the coupling agent. Examples include, but are not limited to, N,N'-ethylene bis-stearamide (EBS) wax, non-metallic stearates, paraffin wax, polyester wax, polypropylene wax, fatty acid derived bis-amides, ethylene bis-oleamide, esters such as stearyl stearate, distearyl phthalate, pentaerythritol adipate stearate, ethylene glycol distearate, pentaerythritol tetrastearate, glycerol tristearate, polyethylene glycol 400 monostearate, glycerol monooleate, glycerol distearate, blended complex modified fatty acid esters, and the like.
2. Inorganic particulates that impart lubrication and improved mechanical properties, for example, talc, calcium carbonate, clay, mica, pumice, alumina, diatomaceous earth, glass, silica, titanium oxide, iron oxide, zinc oxide, magnesium oxide, ceramic materials, calcium silicate hydrates, microspheres, perlite, zeolites, kaolin, metakaolin, polymeric resin emulsion, wollastonite, barium sulfate, calcium sulfate, acrylics, vermiculite, microspheres, gypsum, calcium aluminate, magnesia, and the like, and combinations thereof.
3. The composition can also contain at least one additional component. Examples of suitable additional components include, but are not limited to, antioxidants, foaming agents, dyes, pigments, cross-linking agents, inhibitors, and accelerators. At least one further conventional additive may be used, such as compatibilizers, enhancers, mold-releasing agents, coating materials, humectants, plasticizers, sealing materials, thickening agents, diluting agents, binders, and/or any other commercially available or conventional components.
4. Antioxidants are added to prevent degradation of polymer during processing. An example is Chemtura Corporation's Naugard B25 (a mixture of tris (2,4-di-tert-butyl phenyl) phosphite and tetrakis methylene (3,5-di-tert-butyl-4-hydroxyhydrocinnamate) methane). Foaming agent is added to decrease density of the cellulosic-thermoplastic composite by foaming. Examples of foaming agents include Chemtura Corporation's Celogen TSH (toluene sulfonyl hydrazide), Celogen AZ (azodicarbonamide), Celogen OT (p-p'-oxybis(benzenesulfonylhydrazide)), Celogen RA (p-toluene sulfonyl semicarbazide), Opex 80 (dinitrosopentamethylenetetramine), and Expandex 5-PT (5-phenyltetrazole).
5. Colorants are pigments or dyes. Dyes are commonly organic compounds that are soluble in plastic, forming a neutral molecular solution. They produce bright intense colors and are transparent. Pigments are generally insoluble in plastic. The color results from the dispersion of fine particles (in the range of about 0.01 to about 1 µm) throughout thermoplastic. They produce opacity or at least some translucence in the cellulosic-thermoplastic composite. Pigments can be organic or inorganic compounds and are viable in a variety of forms including dry powders, color concentrates, liquids, and pre-color resin pellets. The most common inorganic pigments include oxides, sulfides, chromates, and other complexes based on a heavy metal such as cadmium, zinc, titanium, lead, molybdenum, iron, combinations thereof, and others. Ultramarines are typically sulfide-silicate complexes containing sodium and aluminum. Often pigments comprise mixtures of two, three, or more oxides of iron, barium, titanium, antimony, nickel, chromium, lead, and others in known ratios. Titanium dioxide is a widely used and known bright white thermally stable inorganic pigment. Other known organic pigments include azo or diazo pigments, pyrazolone pigments, permanent red 2B, nickel azo yellow, litho red, and pigment scarlet.
6. Cross-linking agents can optionally be added to strengthen the bond between starch particles. The cross-linking agent bonds across the pendent hydroxyl groups on the starch molecular chain. Cross-linking agents must characteristically form a strong bond at relatively low temperatures. Examples of cross-linking agents that can be used include polyurethanes such as isocyanate, phenolic resin, unsaturated polyester and epoxy resin and combinations thereof. Phenolic resin may be any single stage or two-stage resin, preferably with a low hexane content.
7. Inhibitors can be added to retard the speed of the cross-linking reaction. Examples of known inhibitors include organic acids, such as citric acid.
8. Accelerators can be added to increase the speed of the cross-linking reaction. Examples of accelerators include amine catalysts such as Dabco BDO (Air Products), and DEH40 (Dow Chemical).

The amounts of the various components of the composition can be adjusted by those skilled in the art depending on the specific materials being used and the intended use of the material.

The compositions of the present invention can be prepared by a variety of methods, such as those involving intimate admixing of the ingredients with any additional materials desired in the formulation. Suitable procedures include solution blending and melt blending. Because of the availability of melt blending equipment in commercial polymer processing facilities, melt processing procedures are generally preferred. Examples of equipment used in such melt compounding methods include: co-rotating and counter-rotating extruders, single screw extruders, disc-pack processors, batch and continuous mixers of sizes ranging from lab to production scale, and various other types of extrusion and mixing equipment. In some instances, the compounded material exits the extruder through small exit holes in a die and the resulting strands of molten resin are cooled by passing the strands through a water bath. The cooled strands can be chopped into small pellets for packaging and further handling.

The advantages and the important features of the present invention will be more apparent from the following examples.

### EXAMPLES

The coupling agents used in the practice of the present invention are listed in Table 1. Coupling agents I-A, I-B, and I-D are products commercially available from Chemtura Corporation as Polybond 3109, 3029, and 3200, respectively. Coupling agents I-C and I-E are developmental products.

The maleic anhydride contents of the coupling agents were determined by dissolving the agents in boiling toluene and titrating to a bromothymol blue end point using a standard 0.3N methanolic KOH solution. The KOH titrant was standardized using benzoic acid. The number of milliequivalents of KOH titrant needed to neutralize one hundred grams of coupling agent was determined. The percent maleic anhydride in the coupling agent was then calculated assuming one mole of KOH neutralized one mole of maleic anhydride. This assumption was confirmed by titration of straight maleic anhydride under the same conditions under which the coupling agents were tested.

The Melt Flow Index (MFI) of the coupling agent was determined using a Tinius Olsen Extrusion Plastometer Model MP600 following procedures outlined in ASTM D1238.

The coupling agents I-A through I-C in Table 1 were evaluated in a 60% granular starch filled linear low density polyethylene (LLDPE) resin blend, while coupling agents I-D and I-E were evaluated in 50% starch filled polypropylene (PP). The starch was obtained from Cargill Corporation, Cedar Rapids, IA as Pearl Starch B. The LLDPE was a butene copolymer sold by Equistar, Cincinnati, OH as Pethrothene GA 501020 (1 MFI, 0.918 g/cc density). The PP was Fortilene HB9200 (4 MFR, 0.900 gm/cc density) manufactured by Ineos Olefins & Polymers USA, La Porte, TX. A small amount (0.1%) of Naugard B-25 antioxidant (phenolic/phosphate blend) was added to prevent degradation during compounding and molding. Addition levels for the coupling agents were 0.0-2.0% based on the total formulation weight. Samples were mixed in a Brabender internal mixer with a 67 gram load capacity at a set temperature of 170°C for 10 minutes at 100 rpm. The mixed samples were then compression molded in a 5" X 4 1/2" x 1/8" mold for 5 minutes at 40 tons pressure using a Tetrahedron automated press.

The ASTM D790 test procedure was used to generate the flexural strength data. Water uptake was determined by measuring the weight of triplicate samples 1'x1'x1/8" before and after immersion in deionized water for 30 days at room temperature. Percent weight gain was then calculated.

Test formulations are given in Tables 2 and 4 and mechanical property data on these formulations in Table 3 and 5. Water uptake data are given in Table 6. Number codes designate samples according to the present invention, while letter codes denote comparative samples.

| **Table 1** | | | |
|---|---|---|---|
| **Characterization of MA-PE Coupling Agents** | | | |
| **Coupling Agent Type** | **Type Resin** | **% Maleic Anhydride** | **MFI @ 190°C, 2.16Kg** |
| Invention A (I-A) | LLDPE | 1.0 | 30 |
| Invention B (I-B) | HDPE | 1.6 | 4 |
| Invention C (I-C) | HDPE | 2.2 | 2 |
| Invention D (I-D) | pp | 1.0 | 110 (250)* |
| Invention E (I-E) | pp | 1.7 | Not Tested (280)* |

| | | | |
|---|---|---|---|
| * MFI values in parentheses measured at 230°C and 2.16 kg | | | |

| **Table 2** | | | | | | |
|---|---|---|---|---|---|---|
| **Formulations for 60% Starch-filled LLDPE Formulations** | | | | | | |
| **Inventive Examples** | **1** | **2** | **3** | **4** | **5** | **6** |
| Pearl Starch B | 60 | 60 | 60 | 60 | 60 | 60 |
| Naugard B-25 | 0.1 | 0.1 | 0.1 | 0.1 | 0.1 | 0.1 |
| Coupling agent I-A | 1 | 2 | | | | |
| Coupling agent I-B | | | 1 | 2 | | |
| Coupling agent I-C | | | | | 1 | 2 |
| LLDPE | 38.9 | 37.9 | 38.9 | 37.9 | 38.9 | 37.9 |
| | | | | | | |

| **Comparative Examples** | **A** | **B** | **C** | | | |
|---|---|---|---|---|---|---|
| Pearl Starch B | | 60 | 60 | | | |
| Naugard B-25 | 0.1 | 0.1 | 0.1 | | | |
| Coupling agent I-A | | --- | --- | | | |
| Coupling agent I-B | | --- | --- | | | |
| Coupling agent I-C | --- | --- | --- | | | |
| LLDPE | 99.9 | 39.9 | 39.9 | | | |

| **Table 3** | | | | | | |
|---|---|---|---|---|---|---|
| **Properties of 60% Starch Filled LLDPE Formulations** | | | | | | |
| **Inventive Examples** | **1** | **2** | **3** | **4** | **5** | **6** |
| Flexural Modulus, MPa | 737 | 776 | 890 | 860 | 911 | 943 |
| Flexural Strength, MPa | 23.5 | 27.1 | 25.9 | 26.2 | 26.8 | 27.2 |
| | | | | | | |

| **Comparative Examples** | **A** | **B** | **C** | | | |
|---|---|---|---|---|---|---|
| Flexural Modulus, MPa | 167 | 465 | 526 | | | |
| Flexural Strength, MPa | 8.8 | 11.6 | 10.6 | | | |

It was noted that adding the maleic anhydride-functionalized coupling agents improved both the flexural modulus and flexural strength of the 60% starch-filled LLDPE relative to a composite with no coupling agent (Examples 1-6 vs Examples B, C). Coupling agent I-C was particularly effective in the 60% starch filled LLDPE formulations. At 1% loading, it gave higher flexural modulus and the same or higher flexural strength than coupling agents I-A and I-B did at 2% loading.

| **Table 4** | | | | | | |
|---|---|---|---|---|---|---|
| **Formulations for 50% Starch-filled PP Formulations** | | | | | | |
| **Inventive Examples** | **7** | **8** | **9** | **10** | | |
| Pearl Starch B | 50 | 50 | 50 | 50 | | |
| Naugard B-25 | 0.1 | 0.1 | 0.1 | 0.1 | | |
| Coupling agent I-D | 1 | 2 | | | | |
| Coupling agent I-E | | | 1 | 2 | | |
| pp | 48.9 | 47.9 | 48.9 | 47.9 | | |
| | | | | | | |

| **Comparative Examples** | **D** | **E** | **F** | **G** | | |
|---|---|---|---|---|---|---|
| Pearl Starch B | | 50 | 25 | 25 | | |
| Naugard B-25 | 0.1 | 0.1 | 0.1 | 0.1 | | |
| Coupling agent I-D | | | | 2 | | |
| Coupling agent I-E | | | | | | |
| PP | 99.9 | 49.9 | 74.9 | 73.9 | | |

| **Table 5** | | | | | | |
|---|---|---|---|---|---|---|
| **Properties of 50% Starch Filled PP Formulations** | | | | | | |
| **Inventive Examples** | **7** | **8** | **9** | **10** | | |
| Flexural Modulus, MPa | 2365 | 2365 | 2372 | 2242 | | |
| Flexural Strength, MPa | 52.3 | 55.5 | 55.1 | 54.5 | | |
| | | | | | | |

| **Comparative Examples** | **D** | **E** | **F** | **G** | | |
|---|---|---|---|---|---|---|
| Flexural Modulus, MPa | 1253 | 2411 | 1745 | 1734 | | |
| Flexural Strength, MPa | 41.3 | 30.2 | 38.3 | 46.8 | | |

| **Table 6** | | | | | | |
|---|---|---|---|---|---|---|
| **Water Uptake of Unfilled and Starch Filled PP Formulations** | | | | | | |
| **Inventive Example** | 8 | | | | | |
| Water Uptake-30 day | | | | | | |
| * % Weight Gain | 3.2 | | | | | |
| | | | | | | |

| **Comparative Examples** | **F** | **G** | | | | |
|---|---|---|---|---|---|---|
| Water Uptake-30 day | | | | | | |
| * % Weight Gain | 1.1 | 1.0 | | | | |

In the PP examples from Tables 4 and 5, the coupling agents I-D and I-E improved both the flexural modulus and strength of the 50% starch filled PP. While the 50% starch filled PP without coupling agent showed an increase in modulus versus the unfilled PP, it had lower flexural strength. Adding 1% of either coupling agent I-D or I-E resulted in improved modulus and strength versus both unfilled PP and the 50% starch filled formulation without coupling agent. This example further illustrates the improved efficiency of the coupling agents of this invention compared with the coupling agents of U.S. Published Application No. 2005/0171249.

Comparative Examples F and G in Table 5 show that formulations containing 30% or less starch are only slightly higher in modulus and lower to slightly higher in flexural strength compared to an unfilled formulation D regardless of whether they contain a coupling agent or not. In contrast, Inventive Sample 8 containing 50% starch and a coupling agent has almost twice the modulus and over 30% higher strength than unfilled sample D. This illustrates the advantages of using higher starch levels and a coupling agent.

Water uptake data in Table 6 show that Inventive Sample 8 absorbs water at a rate which is three times faster than Comparative Examples F and G. This is taken as an indication that the materials of the present invention are capable of undergoing degradation at a faster rate.

It is expected that some applications may not be able to tolerate the increases in stiffness (modulus) that occur when the higher levels of starch are added to the composite. For such cases, a class of coupling agents that provides lower modulus can be employed. One type of low modulus coupling agent that can be used is a blend of maleic anhydride-functionalized PE or PP with maleic anhydride-functionalized EP elastomer. These types of coupling agents are described in the U.S. Patent Application Serial No. 11/542,045, filed October 2, 2006.

Further, it has been noted that starch-filled polyolefins are degradable, but not biodegradable or compostable. However, it is expected that commercially available pro-degradants can be used in combination with the starch in the practice of the present invention. The starch will first biodegrade, leaving a polyolefin article with high surface area that can then be degraded by the pro-degradant. Thus, it is foreseen that the entire composite can be classified as biodegradable and/or compostable. Suitable pro-degradants are known to those skilled in the art and may include transition metal salts or such other materials as are available in the market. It is further foreseen that the combination of starch, maleic anhydride-functionalized coupling agent, and pro-degradant will provide a unique combination of good mechanical properties and bio-degradability.

While the above description contains many specifics, these specifics should not be construed as limitations of the invention, but merely as exemplifications of preferred embodiments thereof. Those skilled in the art will envision many other embodiments within the scope and spirit of the invention as defined by the claims appended hereto.

## Claims

1. A composition comprising:
(A) from about 60 wt % to about 10 wt % of a polyolefin resin selected from the group consisting of polyethylene, copolymers of ethylene and other alpha olefins, copolymers of polyethylene and vinyl acetate, polypropylene, copolymers of propylene with other alpha olefins, and combinations thereof;
(B) from 40 wt % up to about 90 wt % of a granular starch; and
(C) from about 0.1 wt % to about 10 wt % of a functionalized polyolefin coupling agent consisting of a polyethylene or polypropylene modified by a reactive group including at least one polar monomer selected from the group consisting of ethylenically unsaturated carboxylic acids, ethylenically unsaturated carboxylic acid anhydrides, and mixtures and derivatives thereof.

2. The composition of claim 1 wherein the polyolefin resin is selected from the group consisting of high-density polyethylene, low-density polyethylene, linear low-density polyethylene, polypropylene, and combinations thereof.

3. The composition of claim 1 wherein the polyolefin resin is selected from the group consisting of high density homopolymer polyethylene, high density copolymers of ethylene with butene, hexene, and octene, linear low density polyethylene, polypropylene, and combinations thereof.

4. The composition of claim 1 wherein the ethylenically unsaturated carboxylic acids and anhydrides are selected from the group consisting of maleic acid, fumaric acid, itaconic acid, crotonic acid, acrylic acid, methacrylic acid, maleic anhydride, itaconic anhydride, and substituted maleic anhydrides.

5. The composition of claim 4 wherein the ethylenically unsaturated carboxylic anhydride is maleic anhydride.

6. The composition of claim 1 wherein the granulated starch is present at a level in the range of from about 50 to about 80 wt %.

7. The composition of claim 1 wherein the granulated starch is present at a level in the range of from about 50 to about 70 wt %.

8. The composition of claim 1 wherein the functionalized polyolefin coupling agent is present at a level in the range of from about 0.5 to about 3.0 wt %.

9. The composition of claim 6 wherein the functionalized polyolefin coupling agent is present at a level in the range of from about 0.5 to about 3.0 wt %.

10. The composition of claim 1 wherein the functionalized polyolefin coupling agent is present at a level in the range of from about 0.5 to about 2.0 wt %.

11. The composition of claim 7 wherein the functionalized polyolefin coupling agent is present at a level in the range of from about 0.5 to about 2.0 wt %.

## Patentansprüche

1. Eine Zusammensetzung enthaltend:
(A) von etwa 60 Gew.-% bis zu etwa 10 Gew.-% eines Polyolefinharzes, ausgewählt aus der aus Polyethylen, Copolymeren von Ethylen und anderen alpha-Olefinen, Copolymeren von Polyethylen und Vinylacetat, Polypropylen, Copolymeren von Propylen mit anderen alpha-Olefinen und Kombinationen davon bestehenden Gruppe;
(B) von 40 Gew.-% bis zu etwa 90 Gew.-% einer körnigen Stärke; und
(C) von etwa 0,1 Gew.-% bis zu etwa 10 Gew.-% eines funktionalisierten Polyolefinhaftvermittlers bestehend aus einem Polyethylen oder Polypropylen modifiziert durch eine reaktive Gruppe umfassend mindestens ein polares Monomer ausgewählt aus der aus ethylenisch ungesättigten Carbonsäuren, ethylenisch ungesättigten Carbonsäureanhydriden und Mischungen und Derivaten davon bestehenden Gruppe.

2. Die Zusammensetzung des Anspruchs 1, worin das Polyolefinharz aus der aus Polyethylen hoher Dichte, Polyethylen niedriger Dichte, linearem Polyethylen niedriger Dichte, Polypropylen und Kombinationen davon bestehenden Gruppe ausgewählt wird.

3. Die Zusammensetzung des Anspruchs 1, worin das Polyolefinharz aus der aus Homopolymer-Polyethylen hoher Dichte, Copolymeren hoher Dichte von Ethylen mit Buten, Hexen und Octen, linearem Polyethylen niedriger Dichte, Polypropylen und Kombinationen davon bestehenden Gruppe ausgewählt wird.

4. Die Zusammensetzung des Anspruchs 1, worin die ethylenisch ungesättigten Carbonsäuren und Anhydride aus der aus Maleinsäure, Fumarsäure, Itaconsäure, Crotonsäure, Acrylsäure, Methacrylsäure, Maleinsäureanhydrid, Itaconsäureanhydrid und substituierten Maleinsäureanhydriden bestehenden Gruppe ausgewählt werden.

5. Die Zusammensetzung des Anspruchs 4, worin das ethylenisch ungesättigte Carbonsäureanhydrid Maleinsäureanhydrid ist.

6. Die Zusammensetzung des Anspruchs 1, worin die körnige Stärke in einer Menge im Bereich von etwa 50 bis zu etwa 80 Gew.-% vorliegt.

7. Die Zusammensetzung des Anspruchs 1, worin die körnige Stärke in einer Menge im Bereich von etwa 50 bis zu etwa 70 Gew.-% vorliegt.

8. Die Zusammensetzung des Anspruchs 1, worin der funktionalisierte Polyolefinhaftvermittler in einer Menge im Bereich von etwa 0,5 bis etwa 3,0 Gew.-% vorliegt.

9. Die Zusammensetzung des Anspruchs 6, worin der funktionalisierte Polyolefinhaftvermittler in einer Menge im Bereich von etwa 0,5 bis etwa 3,0 Gew.-% vorliegt.

10. Die Zusammensetzung des Anspruchs 1, worin der funktionalisierte Polyolefinhaftvermittler in einer Menge im Bereich von etwa 0,5 bis etwa 2,0 Gew.-% vorliegt.

11. Die Zusammensetzung des Anspruchs 7, worin der funktionalisierte Polyolefinhaftvermittler in einer Menge im Bereich von etwa 0,5 bis etwa 2,0 Gew.-% vorliegt.

## Revendications

1. Composition comprenant :
(A) d'environ 60 % en poids à environ 10 % en poids d'une résine de polyoléfine choisie dans le groupe consistant en le polyéthylène, les copolymères de l'éthylène et autres alpha oléfines, les copolymères du polyéthylène et d'acétate de vinyle, le polypropylène, les copolymères de propylène avec d'autres alpha oléfines et leurs combinaisons ;
(B) de 40 % en poids jusqu'à environ 90 % en poids d'un amidon granulaire ; et
(C) d'environ 0,1 % en poids à environ 10 % en poids d'un agent de couplage polyoléfinique fonctionnalisé consistant en un polyéthylène ou polypropylène modifié par un groupe réactif comprenant au moins un monomère polaire choisi dans le groupe consistant en les acides carboxyliques à insaturation éthylénique, les anhydrides d'acides carboxyliques à insaturation éthylénique et leurs mélanges et dérivés.

2. Composition selon la revendication 1, dans laquelle la résine de polyoléfine est choisie dans le groupe consistant en le polyéthylène haute densité, le polyéthylène basse densité, le polyéthylène basse densité linéaire, le polypropylène et leurs combinaisons.

3. Composition selon la revendication 1, dans laquelle la résine de polyoléfine est choisie dans le groupe consistant en le polyéthylène homopolymère haute densité, les copolymères haute densité de l'éthylène avec le butène, l'hexène et l'octène, le polyéthylène basse densité linéaire, le polypropylène et leurs combinaisons.

4. Composition selon la revendication 1, dans laquelle les acides et anhydrides d'acides carboxyliques à insaturation éthylénique sont choisis dans le groupe consistant en l'acide maléique, l'acide fumarique, l'acide itaconique, l'acide crotonique, l'acide acrylique, l'acide méthacrylique, l'anhydride maléique, l'anhydride itaconique et les anhydrides maléiques substitués.

5. Composition selon la revendication 4, dans laquelle l'anhydride carboxylique à insaturation éthylénique est l'anhydride maléique.

6. Composition selon la revendication 1, dans laquelle l'amidon granulé est présent à un niveau se situant dans la plage d'environ 50 à environ 80 % en poids.

7. Composition selon la revendication 1, dans laquelle l'amidon granulé est présent à un niveau se situant dans la plage d'environ 50 à environ 70 % en poids.

8. Composition selon la revendication 1, dans laquelle l'agent de couplage polyoléfinique fonctionnalisé est présent à un niveau se situant dans la plage d'environ 0,5 à environ 3,0 % en poids.

9. Composition selon la revendication 6, dans laquelle l'agent de couplage polyoléfinique fonctionnalisé est présent à un niveau se situant dans la plage d'environ 0,5 à environ 3,0 % en poids.

10. Composition selon la revendication 1, dans laquelle l'agent de couplage polyoléfinique fonctionnalisé est présent à un niveau se situant dans la plage d'environ 0,5 à environ 2,0 % en poids.

11. Composition selon la revendication 7, dans laquelle l'agent de couplage polyoléfinique fonctionnalisé est présent à un niveau se situant dans la plage d'environ 0,5 à environ 2,0 % en poids.
